# EUROPEAN PATENT SPECIFICATION

(11) **EP 1 148 795 B1**
(45) Date of publication and mention of the grant of the patent: **12.03.2003**
(21) Application number: 99958400.6
(22) Date of filing: 06.12.1999
(51) Int. Cl.: A43B 23/17, C09J 7/00

(54) **SHOE STIFFENER, MATERIAL AND METHOD FOR MAKING SAME AND METHOD OF INCORPORATING A SHOE STIFFENER INTO A SHOE UPPER COMPONENT**
SCHUHKAPPE, WERKSTOFFE UND VERFAHREN ZU DEREN HERSTELLUNG UND VERFAHREN ZUM INTEGRIEREN DER SCHUHKAPPE IN DAS SCHUHOBERTEIL
RAIDISSEUR POUR CHAUSSURES, MATERIAU ET PROCEDE DE FABRICATION DE CE RAIDISSEUR, ET PROCEDE D'INCORPORATION DE CE RAIDISSEUR DE CHAUSSURES DANS LA PARTIE TIGE D'UNE CHAUSSURE

(30) Priority: 09.01.1999 GB 9900384
(43) Date of publication of application: 31.10.2001
(73) Proprietor: Texon UK Limited, Leicester LE4 5BX (GB); Texon Materiales, S.L., 08005 Barcelona (ES)
(72) Inventor: ARNOLD, Brian, Syston, Leicester LE7 2AL (GB)
(86) International application number: GB9904103
(87) International publication number: WO00041585

(56) References cited:
- EP-A- 0 183 912
- WO-A-97/38060
- US-A- 3 950 864
- US-A- 3 973 284
- US-A- 4 080 680
- US-A- 4 308 673
- US-A- 5 667 857

## Description

### Technical Field

This invention is concerned with a shoe stiffener, a sheet material suitable for use in the manufacture of same, a method of making such a material and a method of incorporating a shoe stiffener into a shoe upper.

### Background Art

The term "shoe" where used herein is to be understood as denoting outer footwear generally whether ready for wear or in the course of manufacture.

It is well known to incorporate shoe stiffeners in shoes to retain the shoe in a desired shape. For example shoe stiffeners are commonly included in the toe region of a shoe upper frequently referred to as "toe puffs" and in the heel end region of a shoe upper, commonly referred to as heel end stiffeners or counters.

A variety of materials have been proposed for providing such shoe stiffeners and commonly comprising polymeric materials which can be rendered relatively soft and pliable so that the shoe stiffener can be readily shaped to a desired shape but which can thereafter become relatively rigid and stiff thus to provide a shape retaining means for the shoe upper. Such polymeric materials have been applied in a variety of ways including impregnation of a suitable polymeric material into a textile fabric (woven or non-woven), the impregnated fabric being softenable by heating and bonded to the shoe upper by application of a suitable adhesive layer (such stiffeners are supplied by the applicant company under the Registered Trade Mark "Tufflex" and "Formo"). It has also been proposed to apply polymeric material directly to a shoe upper component by coating the polymeric material onto the component using a suitable applicator. It has further been proposed to provide shoe stiffeners consisting of a sheet of thermoplastic polymeric material which can be rendered pliable and adhesive by heating to an appropriate temperature: such a shoe stiffener is described in European Patent No. 0183912.

US Patent No. 3973284 discloses a method of stiffening a selected area of a shoe component of flexible sheet material in which a layer of molten synthetic polymeric material is coated on the area to be stiffened, rigid, preferably heat softenable, granules are applied to the coating layer while the coating material is soft to cause the granules to adhere, and the shoe component is pressed against the second flexible shoe component with the coating and granules between the -parts and with the coating in heat softened condition to force the coating material through openings between the granules and into wetting engagement with the second shoe component. The assembled shoe components may then be shaped and the polymeric material cooled to form a layer of hardened polymeric material with the granules locked in as it reinforcing stiffening bodies.

US Patent No. 4308673 discloses a thermoplastic or through the action of solvent shapeable, shoe stiffening and likewise non-slip inner material for the heel region in the form of continuous sheets or blanks consisting of an embedded fibre structure which is loaded or filled with at least one synthetic resin acting as a stiffening agent at normal temperature up to about 60°C in an amount of 0.1 to 0.9 kilograms per square metre fibre structure in the course of which the loading in a given case can contain fillers, die stuffs, pigments, plasticizers, propellants, stabilisers, processing aids and/or extenders in the customary amounts.

For the manufacture of certain types of shoe it would be desirable to provide a shoe stiffener which can be first heated to a temperature sufficient that the stiffener becomes pliable and adhesive but which can nevertheless be manipulated comfortably by hand without sticking to or burning the fingers of an operator but such a stiffener has not been satisfactorily provided heretofore.

It is one of the various objects of the present invention to provide an improved material suitable for use in the manufacture of a shoe stiffener.

Another object of the present invention is to provide an improved shoe stiffener.

Yet a further object of the present invention is to provide an improved method of incorporating a shoe stiffener with a shoe upper component.

### Disclosure of Invention

Accordingly, a first aspect of the present invention provides a material suitable for use in the manufacture of a shoe stiffener consisting of a stiffener composition including a polymeric material which is stiff at ambient temperature below 50°C but is pliable and adhesive at an elevated temperature between 50°C and 90°C and has a melt viscosity measured at 100°C in the range from 100 Pas to 10,000 Pas characterised in that the stiffener composition is between two layers of sheet material, at least one of said layers of sheet material having openings therein in a size range from 0.15 mm² to 5 mm².

The polymeric material is flowable under pressure at said elevated temperature such that when the stiffener composition is heated to said elevated temperature the stiffener can be readily manipulated and positioned in a shoe upper and thereafter subjected to pressure to cause sufficient of the polymeric material to flow through the openings in the sheet material and adhere to adjacent shoe upper materials whereby to bond the stiffener in the shoe.

Size ranges where referred to herein refer to linear dimensions; thus the areas of the openings in said layer of sheet material range, approximately between about 0.02 sq mm and 25 sq mm.

In a preferred material in accordance with the invention the elevated temperature is in the range from 60°C to 80°C, more preferably about 75°C to 80EC.

Preferably the melt viscosity of the polymeric material in a material according to the invention at 100°C is in the range from 900 Pas to 2500 Pas, more preferably about 1500 Pas. The viscosity of the stiffener composition is preferably not more than 10,000 PaS. Viscosity is conveniently measured by a capillary rheometer at low shear on an instrument such as a Rosand capillary rheometer.

In a preferred material in accordance with the invention the openings in said layer of sheet material have a size range from 0.3 mm² to 1.5 mm² (opening areas between about 0.09 sq. mm and 2.25 sq mm).

In one embodiment the size range is about 0.5 mm² (area about 0.25 sq mm); in another embodiment the size of the openings is about 0.4 mm x 0.95 mm (area about 0.38 sq. mm). The sizes of the openings can be measured in any convenient way. For example, for rectangular openings in a woven scrim, the length and breadth of a number of openings can be determined under a microscope and an average taken to calculate an average opening area. More irregular openings eg. in an apertured non-woven fabric can be measured by producing an enlarged image of the fabric, using a planimeter to measure the area and correcting to take account of the magnification.

Preferably a sheet material in accordance with the invention has a thickness from 0.4mm up to 2.00mm, more preferably from 0.7mm up to 1.2mm.

Whereas the layer of stiffener composition of a material in accordance with the invention may consist solely of a polymeric material, the stiffener composition preferably comprises a mixture of a polymeric material and a particulate filler. The use of a suitable filler can enhance the rigidity of the stiffener composition when cold. Suitably, the stiffener composition in a material in accordance with the invention comprises between 85% and 30% by weight of polymeric material and 15% and 70% by weight of particulate filler; however, preferably the filler content does not exceed 50%. The polymeric material may, if desired, comprise a mixture of different polymers and the filler may comprise a mixture of particulate fillers.

When a particulate filler is used in a stiffener composition of a material in accordance with the invention, the particle size of the filler should be in a suitable size range, preferably between 50 microns and 500 microns and more preferably between 100 microns and 400 microns.

Polymeric materials are often mixed with fillers and many of the fillers which are commonly used for compounding with polymeric materials may be suitable for use in a stiffener composition in a material in accordance with the invention. Amongst the most suitable materials are mica and talc.

The layers of sheet material between which the stiffener composition is carried may be provided by any suitable sheet material. Amongst suitable materials are woven or knitted fabrics, and apertured non-woven fabric.

The sheet material chosen for use in the manufacture of material in accordance with the invention will depend on the viscosity of the polymeric material and the size of the openings in the sheet material. It will be appreciated that if the openings are too small the polymeric material will not be able to flow through the openings to bond to the adjacent shoe upper component whereas if the openings are too large this can lead to difficulties when handling the hot shoe stiffener materials. A textile fabric of a type commonly referred to as scrim may be suitable. Some melt bonded fabrics may also be suitable, for example the fabric supplied under the trade name "Reemay". Warp-knitted fabrics may also be particularly useful. Textile fibres which may be used in a suitable textile fabric include cotton, cotton/polyester blends, polyester and nylon fibres.

Preferred polymeric materials suitable for use in stiffener composition of materials in accordance with the invention include polycaprolactone and poly(tetramethylene-adipate).

In another aspect the invention may be considered to provide a shoe stiffener comprising a material in accordance with the invention.

In yet another aspect the invention may be considered to provide a method of incorporating a shoe stiffener with a shoe upper component comprising positioning the stiffener with one of said layers of sheet material with openings therein in face-to-face contact with the upper component, before or after said positioning heating the stiffener to such an extent that the polymeric material becomes pliable and flowable under pressure, and whilst the polymeric material is still flowable pressing the stiffener against the upper component under pressure sufficient to cause sufficient of the polymeric material to be expelled from the layer of stiffener composition through said openings, shaping the upper component and contacting stiffener to a desired shape and cooling the polymeric material or allowing it to cool, whereby the stiffener is bonded to the upper component by the expelled polymeric material and provides stiffening of the upper component.

There now follow detailed descriptions to be read with reference to the accompanying drawing of shoe stiffeners and sheet materials embodying the invention, a method of making the stiffeners and a method of incorporating them into a shoe, also embodying the invention. It will be realised that the materials, stiffeners and methods have been selected for description to illustrate the invention by way of example.

### Brief Description of Drawing

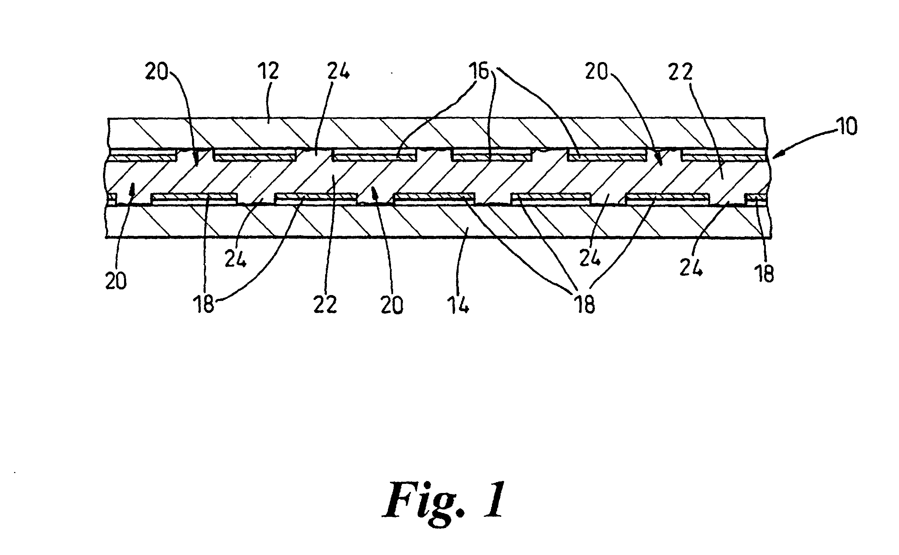

In the accompanying drawing:-
Figure 1 is a diagrammatic view showing the incorporation of a shoe stiffener embodying the invention into a shoe upper.

### Modes for Carrying Out the Invention

In Figure 1 an illustrative shoe stiffener 10 embodying the invention is shown positioned between two shoe upper components, namely an outer integument 12 of the upper and a lining material 14. The illustrative shoe stiffener 10 is a shoe counter and the counter 10 is within a counter pocket formed by stitching the periphery of the lining material 14 to the outer integument 12 of the upper in known manner.

The outer integument 12 may be any suitable material, for example leather. The lining material 14 may be a suitable known lining material, for example the non-woven impregnated textile fibre based material supplied by the applicant company under the trade mark Aquiline.

The illustrative shoe stiffener is cut, in known manner from a sheet of material embodying the invention in its material aspects.

The illustrative shoe stiffeners comprise a first layer 16 of sheet material and a second layer 18 of sheet material. Between the layers 16, 18 is a layer 22 of a stiffener composition which includes a polymeric material that is stiff at ambient temperature and is pliable, adhesive and flowable under pressure at an elevated temperature. The polymer is polycaprolactone which becomes pliable adhesive and flowable under pressure at a temperature of about 80°C. The stiffener composition further comprises a mica particulate filler having a particle size in the range of 0.05mm to 0.25mm which is present in an amount of about 25% by weight, the polycaprolactone being present in an amount of about 75% by weight.

In the first illustrative stiffener both layers 16, 18 are cotton textile fibre woven scrims having openings 20 therein each opening having an area of about 0.5 mm² and being generally rectangular in shape.

A second illustrative stiffener, otherwise similar to the first illustrative stiffener, uses sheet material for the layers 16, 18 which is a woven polyester scrim having openings 20 which are about 0.4 mm x 0.95 mm (area about 0.38 sq mm).

The illustrative materials are made by hot-melt extruding the layer 22 of stiffener composition between the two layers 16, 18 of sheet material and rapidly cooling the laminated material by passing it through the nip between a pair of cooled calendar rolls of a calendar roll stack about which the laminated material is passed. The pressure applied by the rolls is relatively light - sufficient to cause the outer layers 16, 18 to bond to the stiffener composition 22 but not sufficient for the material of the stiffener composition 22 to be expelled through the openings 20 in the layers 16, 18.

The thus made laminated stiffener material is rolled onto a reel. When it is wished to make illustrative shoe stiffeners, the laminated material is unrolled from the reel and stiffeners are cut from the laminated material using cutting knives in a manner which is generally well known to those skilled in the art.

When it is wished to incorporate one of the illustrative shoe counters into the heel end region of a shoe, a counter pocket is first made on the shoe upper by stitching the lining material 14 to the outer integument 12 of the shoe upper to provide a pocket into which the illustrative shoe counter may be placed when it has been activated.

In carrying out the illustrative method, the counter 10 is first heated to an elevated temperature sufficiently high that the stiffener composition 22 becomes pliable, tacky and flowable under pressure. A suitable temperature is about 80-85°C. The stiffener composition does not flow through the holes 20 until it is subjected to significant pressure and the fabric layers 16, 18 provide a barrier so that the shoe counter 10 can be handled comfortably by an operator when hot; the relatively low thermal conductivity of the fabric also assists in this respect.

In this hot and pliable condition the shoe counter 10 is introduced into the counter pocket between the outer integument 12 and the lining material 14. The shoe upper, including the counter, is then subjected to a lasting operation which shapes the shoe upper around a last and the upper is retained in this shaped condition until the stiffener composition has cooled below its activation temperature and solidified to a rigid condition.

During the lasting operation considerable pressure is exerted on the shoe upper and the exerted pressure is sufficient to cause sufficient of the polymeric material in the stiffener composition 22 to be expelled through the openings 20 in the layers 16, 18. This expelled material 24 is forced firmly into engagement with the adjacent one of the layers 16, 18 whilst still in a tacky adhesive condition and may spread sideways from the openings 20 between the layers 16, 18 and the adjacent one of the upper components 12, 14. When the stiffener composition is cooled, the material 24 which has been expelled through the openings 20 bonds the counter 10 firmly to the upper components 12, 14 providing a relatively rigid and shape-retaining back part to the shoe upper.

Those skilled in the art will be aware that it is common practice to skive the margins of shoe counters to provide a tapering (or skived) edge portion which permits the counter to blend with the upper component without uncomfortable and unsightly ridges in the shoe upper.

The illustrative shoe counters as well as being readily mouldable and self-adhesive have a relatively high modulus so that the counter material is relatively thin (for a particular stiffness) and thus this, in some cases, may allow the illustrative counters to be used without skiving. This may be assisted by the relatively flowable nature of the stiffener composition 22 under lasting pressures which will tend to flow away from the edge portions (at which pressures may tend to be greatest) and towards a central region of the counter where greatest stiffness is required.

The layers 16, 18 of the illustrative counters 10 also provide reinforcement of the counter against tensile forces which, in the absence of the layers 16, 18, may be resisted less adequately.

Whereas in carrying out the illustrative method of incorporating the illustrative counters 10 in a shoe, the shoe counter 10 is first heated and activated so that the stiffener composition 22 is in a pliable tacky and flowable condition before introduction into the counter pocket, the illustrative counters 10, in carrying out another method of incorporating the counters in a shoe in accordance with the invention, may be introduced into a counter pocket whilst cold and the whole shoe heated until the stiffener composition 22 reaches activation temperature, the shoe thereafter being lasted.

Whereas the illustrative shoe counters 10 have layers 16, 18 on both sides which have openings 20 therein, in the manufacture of a counter in accordance with the invention, only one of the layers 16, 18 may be provided with openings and the other layer may be substantially continuous. This continuous layer may be a shoe lining material of a type known to those skilled in the art, for example Aquiline mentioned previously. In that case the stiffener would probably not be handled hot and it would be necessary to temporarily attach the counter to the shoe upper by other means, for example stitching or a tacking adhesive with the layer having the openings 20 adjacent the outer integument of the shoe upper, either before or after activation of the stiffener composition, and then the shoe lasted as described previously.

Whereas the preferred shoe stiffener materials are made by extruding the stiffener composition between two layers 16, 18, it will be appreciated that the stiffener composition may be introduced in other ways, for example a pre-extruded sheet may be positioned between two fabric layers and laminated thereto by applying slight heat and pressure (sufficient to adhere the fabric layers to the stiffener composition but not sufficiently great to cause the stiffener composition to flow through openings in the fabric). Other methods may also be suitable.

## Claims

1. A material suitable for use in the manufacture of a shoe stiffener consisting of a stiffener composition (22) including a polymeric material which is stiff at ambient temperature below 50°C but is pliable and adhesive at an elevated temperature between 50°C and 90°C and has a melt viscosity measured at 100°C in the range from 100 Pas to 10,000 Pas **characterised in that** the stiffener composition is between two layers (16; 18) of sheet material, at least one of said layers (16; 18) of sheet material having openings (20) therein in a size range from 0.15 mm² to 5 mm².

2. A material according to claim 1 wherein the elevated temperature is in the range from 60°C to 80°C.

3. A material according to either one of claims 1 and 2 wherein the melt viscosity of the polymeric material at 100°C is in the range from 900 Pas to 2500 Pas.

4. A material according to any one of the preceding claims wherein the openings (20) have a size range from 0.3 mm² to 1.5 mm².

5. A material according to any one of the preceding claims wherein the shoe stiffener material is from 0.4mm up to 2.00mm in thickness.

6. A material according to any one of the preceding claims wherein the stiffener composition (22) comprises between 85% and 30% by weight of said polymeric material and 15% and 70% by weight of particulate filler.

7. A material according to claim 6 wherein the particulate filler has a size between 50 microns and 500 microns.

8. A material according to claim 7 wherein the size of the particulate filler is between 100 microns and 400 microns.

9. A material according to any one of claims 6 to 8 wherein the filler is mica.

10. A material according to any one of claims 6 to 8 wherein the filler is talc.

11. A material according to any one of the preceding claims wherein the polymeric material comprises polycaprolactone.

12. A material according to any one of claims 1 to 10 wherein the polymeric material comprises poly(tetramethylene-adipate).

13. A material according to any one of the preceding claims wherein at least one of said layers of (16; 18) sheet material is a woven fabric.

14. A material according to any one of the preceding claims wherein at least one of said layers (16; 18) of sheet material is a knitted fabric.

15. A material according to any one of the preceding claims wherein at least one of said layers (16; 18) of sheet material is an apertured non-woven fabric.

16. A shoe stiffener comprising a material in accordance with any one of the preceding claims.

17. A method of incorporating a shoe stiffener according to claim 16 with a shoe upper component (12; 14) comprising positioning the stiffener (10) with one of said layers of sheet material (16; 18) with openings therein in face-to-face contact with the upper component (12; 14), before or after said positioning heating the stiffener to a temperature between 50°C and 90°C at which the polymeric material becomes pliable and flowable under pressure, and whilst the polymeric material is still flowable pressing the stiffener against the upper component under pressure sufficient to cause sufficient of the polymeric material to be expelled from the layer of stiffener composition through said openings, shaping the upper component and contacting stiffener to a desired shape and cooling the polymeric material or allowing it to cool, whereby the stiffener is bonded to the upper component by the expelled polymeric material and provides stiffening of the upper component.

## Patentansprüche

1. Material, das zur Verwendung bei der Herstellung eines Schuhversteifers geeignet ist, bestehend aus einer Versteifungszusammensetzung (22), umfassend ein Polymermaterial, das bei Umgebungstemperatur unter 50°C steif, bei einer erhöhten Temperatur zwischen 50°C und 90°C jedoch geschmeidig und haftfähig ist und eine Schmelzviskosität bei 100°C zwischen 100 Pa und 10.000 Pa hat, **dadurch gekennzeichnet, dass** die Versteifungszusammensetzung zwischen zwei Lagen (16; 18) aus Bahnmaterial liegt, wobei wenigstens eine der genannten Lagen (16; 18) aus Bahnmaterial Öffnungen (20) mit einer Größe zwischen 0,15 mm² und 5 mm² aufweist.

2. Material nach Anspruch 1, wobei die erhöhte Temperatur zwischen 60°C und 80°C liegt.

3. Material nach einem der Ansprüche 1 und 2, wobei die Schmelzviskosität des Polymermaterials bei 100°C zwischen 900 Pa und 2500 Pa liegt.

4. Material nach einem der vorherigen Ansprüche, wobei die Öffnungen (20) eine Größe zwischen 0,3 mm² und 1,5 mm² haben.

5. Material nach einem der vorherigen Ansprüche, wobei das Schuhversteifungsmaterial eine Dicke zwischen 0,4 mm und 2,00 mm hat.

6. Material nach einem der vorherigen Ansprüche, wobei die Versteifungszusammensetzung (22) zwischen 85 und 30 Gew.-% des genannten Polymermaterials und zwischen 15 und 70 Gew.-% an partikulärem Füllstoff umfasst.

7. Material nach Anspruch 6, wobei der partikuläre Füllstoff eine Größe zwischen 50 Mikron und 500 Mikron hat.

8. Material nach Anspruch 7, wobei die Größe des partikulären Füllstoffs zwischen 100 Mikron und 400 Mikron liegt.

9. Material nach einem der Ansprüche 6 bis 8, wobei der Füllstoff Glimmer ist.

10. Material nach einem der Ansprüche 6 bis 8, wobei der Füllstoff Talk ist.

11. Material nach einem der vorherigen Ansprüche, wobei das Polymermaterial Polycaprolacton umfasst.

12. Material nach einem der Ansprüche 1 bis 10, wobei das Polymermaterial Poly(tetramethylen-adipat) umfasst.

13. Material nach einem der vorherigen Ansprüche, wobei wenigstens eine der genannten Lagen (16; 18) aus Bahnmaterial ein Webstoff ist.

14. Material nach einem der vorherigen Ansprüche, wobei wenigstens eine der genannten Lagen (16; 18) aus Bahnmaterial ein Wirkstoff ist.

15. Material nach einem der vorherigen Ansprüche, wobei wenigstens eine der genannten Lagen (16; 18) aus Bahnmaterial ein mit Löchern versehener Vliesstoff ist.

16. Schuhversteifer, umfassend ein Material nach einem der vorherigen Ansprüche.

17. Verfahren zum Integrieren eines Schuhversteifers nach Anspruch 16 in eine obere Schuhkomponente (12; 14), umfassend die folgenden Schritte: Positionieren des Versteifers (10) mit einer der genannten Lagen aus Bahnmaterial (16; 18) mit darin befindlichen Öffnungen in Direktkontakt mit der oberen Komponente (12; 14), vor oder nach der genannten Positionierung, Erwärmen des Versteifers auf eine Temperatur zwischen 50°C und 90°C, bei der das Polymermaterial geschmeidig und fließfähig unter Druck wird, und, während das Polymermaterial noch immer fließfähig ist, Pressen des Versteifers gegen die obere Komponente unter einem Druck, der ausreicht, um ausreichend Polymermaterial aus der Lage der Versteifungszusammensetzung durch die genannten Öffnungen zu stoßen, Formen der oberen Komponente und den damit in Kontakt befindlichen Versteifer in eine gewünschte Gestalt und Kühlen oder Abkühlenlassen des Polymermaterials, wodurch der Versteifer durch das ausgestoßene Polymermaterial an die obere Komponente gebunden wird und eine Versteifung der oberen Komponente bewirkt.

## Revendications

1. Matériau apte à être utilisé pour la fabrication d'un raidisseur pour chaussures formé d'un aggloméré raidisseur (22) comprenant un matériau polymérique qui est rigide à une température ambiante inférieure à 50°C mais flexible et adhésif à une température élevée située entre 50 et 90°C et qui présente une viscosité à l'état fondu, mesurée à 100°C, de l'ordre de 100 à 10 000 Pas **caractérisé en ce que** l'aggloméré raidisseur se trouve entre deux couches (16 ; 18) de tissu, au moins une desdites couches (16 ; 18) de tissu présentant des ouvertures (20) mesurant entre 0,15 et 5 mm².

2. Matériau, suivant la revendication 1, dans lequel la température élevée se situe entre 60 et 80°C.

3. Matériau, suivant la revendication 1 ou la revendications 2, dans lequel la viscosité à l'état fondu du matériau polymérique, mesurée à 100°C, se situe entre 900 et 2500 Pas.

4. Matériau, suivant l'une quelconque des revendications précédentes, dans lequel les ouvertures (20) mesurent entre 0,3 et 1,5 mm².

5. Matériau, suivant l'une quelconque des revendications précédentes, dans lequel le matériau raidisseur pour chaussures fait de 0,4 à 2,00 mm maximum d'épaisseur.

6. Matériau, suivant l'une quelconque des revendications précédentes, dans lequel l'aggloméré raidisseur (22) comporte entre 85 et 30 % en poids dudit matériau polymérique et entre 15 et 70 % en poids du produit de remplissage particulaire.

7. Matériau, suivant la revendication 6, dans lequel le produit de remplissage particulaire mesure entre 50 et 500 microns.

8. Matériau, suivant la revendication 7, dans lequel la taille du produit de remplissage particulaire se situe entre 100 et 400 microns.

9. Matériau, suivant l'une quelconque des revendications 6 à 8, dans lequel le produit de remplissage est du mica.

10. Matériau, suivant l'une quelconque des revendications 6 à 8, dans lequel le produit de remplissage est du talc.

11. Matériau, suivant l'une quelconque des revendications précédentes, dans lequel le matériau polymérique comporte de la polycaprolactone.

12. Matériau, suivant l'une quelconque des revendications 1 à 10, dans lequel le matériau polymérique comporte du poly(tétraméthylène-adipate).

13. Matériau, suivant l'une quelconque des revendications précédentes, dans lequel au moins une desdites couches (16 ; 18) de tissu est un tissu tissé.

14. Matériau, suivant l'une quelconque des revendications précédentes, dans lequel au moins une desdites couches (16 ; 18) de tissu est un tissu tricoté.

15. Matériau, suivant l'une quelconque des revendications précédentes, dans lequel au moins une desdites couches (16 ; 18) de tissu est un tissu non tissé perforé.

16. Raidisseur pour chaussures comportant un matériau suivant l'une quelconque des revendications précédentes.

17. Procédé d'incorporation d'un raidisseur de chaussures, suivant la revendication 16, avec une partie tige d'une chaussure (12 ; 14) comprenant la mise en place du raidisseur (10) par rapport à l'une desdites couches de tissu (16 ; 18) ayant des ouvertures en contact en face-à-face avec la partie tige (12 ; 14), avant ou après ladite mise en place, le chauffage du raidisseur à une température située entre 50 et 90°C, température à laquelle le matériau polymérique devient flexible et coulant sous pression, et pendant que le matériau polymérique est encore coulant, la pression du raidisseur contre la partie tige sous pression, et ce d'une manière suffisante, pour causer l'expulsion d'une quantité suffisante du matériau polymérique de la couche d'aggloméré raidisseur au travers desdites ouvertures, la mise en forme de la partie tige et la mise en contact du raidisseur en une forme souhaitée et le refroidissement du matériau polymérique ou le fait de le laisser refroidir, de telle manière que le raidisseur est collé à la partie tige par le matériau polymérique et procure un raidissement de la partie tige.
